(19) Europäisches Patentamt
European Patent Office
Office européen des brevets

(11) **EP 4 362 176 B1**

(12) **EUROPEAN PATENT SPECIFICATION**

(45) Date of publication and mention
of the grant of the patent:
**22.07.2026  Bulletin 2026/30**

(21) Application number: **23203315.9**

(22) Date of filing: **12.10.2023**

(51) International Patent Classification (IPC):
*H01M 50/105* (2021.01)     *H01M 50/103* (2021.01)
*H01M 10/04* (2006.01)     H01M 10/052 (2010.01)
H01M 10/0585 (2010.01)     H01M 50/119 (2021.01)
H01M 50/121 (2021.01)     H01M 50/129 (2021.01)
H01M 4/02 (2006.01)     H01M 10/42 (2006.01)

(52) Cooperative Patent Classification (CPC):
**H01M 10/0436; H01M 10/0413; H01M 50/103;
H01M 50/105;** H01M 10/052; H01M 10/0585;
H01M 50/119; H01M 50/121; H01M 50/129;
H01M 2004/021; H01M 2010/4292; Y02E 60/10

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.10.2022  KR 20220132745**

(43) Date of publication of application:
**01.05.2024  Bulletin 2024/18**

(60) Divisional application:
**25205977.9 / 4 651 248
26184769.3
26184771.9**

(73) Proprietor: **LG Energy Solution, Ltd.
Seoul 07335 (KR)**

(72) Inventors:
• KIM, Hyun Jin
  Daejeon 34122 (KR)
• WI, Yeon Hwa
  Daejeon 34122 (KR)
• KIM, Chang Ho
  Daejeon 34122 (KR)
• KIM, Seon Uk
  Daejeon 34122 (KR)
• KIM, Jae Min
  Daejeon 34122 (KR)

(74) Representative: **Goddar, Heinz J.
Boehmert & Boehmert
Anwaltspartnerschaft mbB
Pettenkoferstrasse 22
80336 München (DE)**

(56) References cited:
**EP-A1- 4 040 525     US-A1- 2020 251 786**

**Description**

CROSS-REFERENCE TO RELATED APPLICATIONS

This application claims the priority of Korean Patent Application No. 10-2022-0132745 filed on October 14, 2022, in the Korean Intellectual Property Office.

BACKGROUND OF THE INVENTION

FIELD OF THE INVENTION

The present invention relates to a secondary battery.

DESCRIPTION OF THE RELATED ART

When compared to a can-type secondary battery, the pouch-type secondary battery may provide a higher energy density in terms of the volume and/or in terms of the weight. Yet, it may be desirable to increase the mechanical strength, particularly in terms of a mechanical resistance against external impacts and strains. More generally, it may be desirable to increase the safety of a pouch-type secondary battery.

With the ongoing diversification of the use environment of the secondary battery, it is desired to increase the durability and the safety of the secondary battery for use particularly in harsh environments. In particular, it is desirable to increase an impact resistance of the pouch-type secondary battery.

The relevant prior art for the present invention is given by US 2020/251786 A1.

SUMMARY OF THE INVENTION

The technical problems known from the prior art are solved by the present invention as defined by the features of the independent claims. Particular examples of the present invention are given by the features of the dependent claims. In particular, the present invention may contribute to increasing a frictional force between the electrode assembly and a battery case (e.g., pouch), thereby suppressing a displacement of the electrode assembly and/or a leakage of the electrolyte from the battery case even when receiving an external impact or mechanical stress. In particular, the present invention may solve the technical problem by a specific configuration of the size of an electrode assembly and the amount of electrode per capacity.

A secondary battery is provided. The secondary battery comprises an electrode assembly, an electrolyte and a battery case accommodating the electrode assembly and the electrolyte. The secondary battery may satisfies the following Equation 1:

$$[\text{Equation 1}] \quad W \,/\, S \le 42 \;(\text{g/Ah}){\cdot}\text{m}^{-2}$$

In Equation 1, W is a weight of the electrolyte in g (gram) per unit capacity of the secondary battery in Ah, and S is a product of a length in m (meter) and a width in m (meter) of the electrode assembly.

The secondary battery as disclosed herein may in addition comprise any, some or all of the features as described hereinafter. It is contemplated that the secondary battery may be provided as a pouch-type battery, a cylindrical battery or a prismatic battery. In specific examples, the secondary battery may be provided as a pouch-type battery.

Unless indicated otherwise, the capacity of the secondary battery may be defined by a rated capacity of the secondary battery. The secondary battery may have a rated capacity of 50 Ah to 200 Ah, preferably 50 Ah to 150 Ah, and more preferably 60 Ah to 140 Ah. The expression of a rated capacity of a secondary battery means an electric capacity generated when a fully charged battery is continuously discharged at 0.33 C to a discharge end voltage. At this time, the full charge voltage (charge end voltage) and discharge end voltage may be appropriately selected depending on the type of secondary battery. For example, when the secondary battery is an NCM cell, the rated capacity may be the discharge capacity when the secondary battery is charged to 4.25 V and then discharged to 2.5 V at 0.33 C. The expression "unit capacity" means 1Ah. The parameter W has the unit of g/Ah (gram per ampere hour). The parameter S has the unit of $\text{m}^2$ (square meter). The quotient W/S has the unit of $(\text{g/Ah}){\cdot}\text{m}^{-2}$. The parameter W is 1.5 g/Ah to 2.2 g/Ah. The parameter S is or 0.02 $\text{m}^2$ to 0.09 m.

Herein, the weight of electrolyte in the secondary battery refers to an amount of electrolyte remaining in the secondary battery after an activation process. Thus, the weight of the electrolyte may indicate a weight of the electrolyte that is present in the secondary battery after completing production or during operation. For the sake of simplicity, the weight of the electrolyte may be used herein interchangeably with a (total) amount of the electrolyte.

The quotient W/S may be 0.1 (g/Ah)·m$^{-2}$ to 42 (g/Ah)·m$^{-2}$, 1 (g/Ah)·m$^{-2}$ to 42 (g/Ah)·m$^{-2}$, 5 (g/Ah)·m$^{-2}$ to 42 (g/Ah)·m$^{-2}$, 10 (g/Ah)·m$^{-2}$ to 42 (g/Ah)·m$^{-2}$, or 20 (g/Ah)·m$^{-2}$ to 42 (g/Ah)·m$^{-2}$, without being limited thereto. In a specific example, the quotient W/S may be 30 (g/Ah)·m$^{-2}$ to 42 (g/Ah)·m$^{-2}$.

The electrolyte may be present on the surfaces of the electrode assembly and on an inner surface of the battery case. The electrolyte may have a non-zero viscosity and specific wetting properties, and thus the presence of the electrolyte in the battery case may reduce a friction between the electrode assembly and (the inner surface of) the battery case. Specifically, an increase of the weight of the electrolyte in the secondary battery may continuously reduce a friction between the electrode assembly and the inner surface of the battery case. Furthermore, the friction between the electrode assembly and the inner surface of the battery case may also depend on a friction surface, which may be defined by the product S of the length and width of the electrode assembly.

On the other hand, however, a reduction of the electrolyte may adversely affect the capacity of the secondary battery and may even impair the operability and a lifetime of a secondary battery. Against this background, the inventors of the present application made efforts to find a parameter range in which a balance between a high capacity, proper amount of the electrolyte and the size of the electrode assembly is achieved. The subject matter of the claims reflects such parameter range(s). In this manner, a high friction between the electrode assembly and the inner surface of the batter case is ensured, thereby suppressing a displacement of the electrode assembly within or out of the battery case, while maintaining a proper amount of the electrolyte in the secondary battery.

A secondary battery may be manufactured by preparing a respective electrode active material slurry and applying it to a positive electrode collector and a negative electrode collector, thereby obtaining a positive electrode and a negative electrode. One or more layers of the positive electrode, one or more layers of a separator are stacked upon each other in a manner that the separator interposes between a layer of the positive electrode and a layer of the negative electrode, thereby obtaining an electrode assembly. The electrode assembly is accommodated in a battery case, which may be a pouch, a cylindrical can or a polyhedric can, and an electrolyte is injected into the battery case.

A pouch-type secondary battery may be manufactured by a press processing on a pouch film stack to form a cup part specifically configured (e.g., shaped and dimensioned) so as to accommodate the electrode assembly. After arranging the electrode assembly in the cup part, an electrolyte may be added to the electrode assembly, and the pouch film stack may be sealed along a sealing part thereof. A can-type secondary battery may be manufactured by accommodating an electrode assembly in a can made of a metal material, injecting an electrolyte into the can, and sealing the can by mounting a cap on an opening of the can. As mentioned, the can may have a cylindrical shape or a polyhedric shape, for example a (rectangular) cuboid or a rhombus.

The electrolyte of the secondary battery may be provided as described in detail below. The electrode assembly of the secondary battery may be provided as described in detail below. The battery case of the secondary battery may be a pouch, which may be used herein in accordance with the understanding in the art of designing and manufacturing secondary batteries. Alternatively, the battery case of the secondary battery may be a can as described herein. In particular, the electrolyte may be provided at least partly between the electrode assembly and an inner surface of the battery case facing the electrode assembly.

Particularly in a pouch-type secondary battery, the electrode assembly may have a rectangular shape, in a plan view, elongated in a longitudinal direction, which may be referred to herein as a length direction. The length as used herein may be measured in the length direction, unless indicated otherwise. A width direction of the electrode assembly indicates a direction that is perpendicular to the length direction and lies in the plane of at least one of the layer(s) of the positive electrode, the layer(s) of the negative electrode and the separator(s). The width as used herein may be measured in the width direction, unless indicated otherwise. In the electrode assembly, the layer(s) of the positive electrode, the layer(s) of the negative electrode and the separator(s) may be stacked in a thickness direction that is perpendicular to both the length direction and the width direction. Herein, the plan view may refer to a viewing direction parallel to the thickness direction of the electrode assembly.

In case of a can-type secondary battery, the electrode assembly as described above may be wound along a winding axis parallel to either the length direction or the width direction. Accordingly, the respectively other one of the length direction and the width direction, which is not parallel to the winding axis, may be parallel to a circumferential direction of the electrode assembly. In case of a can-type secondary battery, the length may refer to the length in the direction of the winding axis in the wound state and the width refers to the length in the direction perpendicular to the winding axis in the wound state..

The battery case may be a pouch, which may be provided in any of the manner disclosed herein. In particular, the pouch may be formed by pressing at least one cup part into a pouch film stack. Accordingly, the cup part may be formed as a planar portion protruding outwardly from the rest of the pouch film stack. The cup part may have a tray-like shape. The cup part may have a planar main surface surrounded by one or more sidewalls that are integral with the rest of the pouch film stack. The planar main surface of the cup part may have a rectangular basic shape in the plan view, whereby the corners may be rounded due to processing requirements or by design. The pouch may implement any, some or all of the features of the pouch as disclosed herein, unless indicated otherwise or technically inappropriate.

In a specific example, the battery case may be a pouch made of a pouch film stack. The pouch, in particular the pouch film stack, may comprise a barrier layer, a base material layer and a sealant layer. The base material layer may be disposed on one surface of the barrier layer, and the sealant layer may be disposed on the other surface of the barrier layer (i.e., opposite to the base material layer). In some examples, the base material layer, the barrier layer and the sealant layer may form the pouch film stack, particularly a laminate structure. The pouch, particularly the pouch film stack thereof, may be press-formed (particularly stretch-formed and/or drawn) such as to have one or more cup parts protruding outwardly (from the rest of the pouch, or the rest of the pouch film stack). The electrode assembly may be accommodated in the one or more cup parts. The one or more cup parts may be shaped and dimensioned so as to accommodate the electrode assembly. The components of the pouch may each implement any, some or all of the respective features as disclosed herein, unless indicated otherwise or technically inappropriate. In particular, any of the base material layer, the barrier layer and the sealant layer may be implemented as respectively described in detail below.

The secondary battery may have a rated capacity of 50 Ah to 200 Ah, preferably 50 Ah to 150 Ah, and more preferably 60 Ah to 140 Ah.

The electrode assembly may have a substantially rectangular shape in the plan view such that a ratio of a length to a width of the electrode assembly ranges between 2.5 to 20, or between 3 to 15, or between 5 and 10. The specific aspect ratio of the electrode assembly may further contribute to increasing the aforementioned friction without increasing the need for electrolyte.

The electrode assembly may have a length of 200 mm to 800 mm and a width of 40 mm to 200 mm. The electrode assembly may have a length of 400 mm to 600 mm and a width of 50 mm to 150 mm. Preferably, the electrode assembly may have a length of 500 mm to 600 mm and a width of 50 mm to 100 mm. The specific combination of the length and width of the electrode assembly may further contribute to increasing the friction as discussed above, without increasing the need for electrolyte. The length and the width may each refer to a maximum extension of the electrode assembly in the length direction and the width direction, respectively, in the plan view. To emphasize this aspect, the term length may be used herein interchangeably with a "full length". For a similar reason, the term width may be used herein interchangeably with a "full width".

Meanwhile, the weight of the electrode assembly may be 500 g to 1500 g, preferably 550 g to 1450 g, and more preferably 600 g to 1400 g. When the weight of the electrode assembly satisfies the above range, high capacity can be realized, and friction between the electrode assembly and the inner surface of the battery case increases, resulting in excellent impact resistance.

Meanwhile, the secondary battery may further include at least one fixing member fixed to the outer surface of the electrode assembly by wrapping the electrode assembly in the width direction. In this case, the contact area between the fixing member and the electrode assembly may be 30% or less, 0 to 30%, 1 to 30%, 5 to 30%, 5 to 25%, or 5 to 20% of the total surface area of the electrode assembly. Since the fixing member is generally made of a material with a low coefficient of friction, when the area of the fixing member increases, the friction between the electrode assembly and the inner surface of the battery case may decrease. Therefore, when using a fixing member, it is desirable to suppress a decrease in friction force by setting the contact area between electrode assemblies to 30% or less.

A frictional force between the electrode assembly and an inner surface of the battery case may be 147N (15 kgf) or more, preferably 147 N (15 kgf) to 392 N (40 kgf), more preferably 167 N (17 kgf) to 343 N (35 kgf). The frictional force between the inner surface of the battery case and the electrode assembly of a secondary battery may be determined as follows. A portion of the battery case was opened by cutting; ; the positive electrode tab of the electrode assembly was held with a jig connected to a wire; the wire was connected to a universal testing machine (UTM); a force applied while pulling the wire at 100 mm/min is measured to determine the frictional force between the electrode assembly and the inner surface of the battery case.

When a crash shock test is performed on the secondary battery under a 133.7 G $\times$ 15.8 m·s crash condition, leakage of the electrolyte is zero. The crash shock test was performed under a 133.7 G $\times$ 15.8 m·s crash condition. After the crash shock test, the battery case is examined for a loss of weight of the electrolyte due to leakage from the battery case and for a displacement of the electrode assembly within or out of the battery case.

In specific examples, the electrode assembly may have a length of 0.2 m to 0.8 m, a width of 0.05 m to 0.15 m, a weight of the electrolyte per unit capacity of 1.0 to 2.8 g/Ah. Such examples may achieve a quotient W/S of 30 $(g/Ah) \cdot m^{-2}$ to 42 $(g/Ah) \cdot m^{-2}$.

In further specific examples, the electrode assembly may have a length of 0.3 m to 0.8 m, a width of 0.06 m to 0.12 m, a weight of the electrolyte per unit capacity of 1.2 to 2.5 g/Ah. Such examples may achieve a quotient W/S of 30 $(g/Ah) \cdot m^{-2}$ to 42 $(g/Ah) \cdot m^{-2}$.

In further specific examples, the electrode assembly may have a length of 0.4 m to 0.6 m, a width of 0.07 m to 0.11 m, a weight of the electrolyte per unit capacity of 1.5 to 2.4 g/Ah. Such examples may achieve a quotient W/S of 30 $(g/Ah) \cdot m^{-2}$ to 42 $(g/Ah) \cdot m^{-2}$.

According to another aspect, a secondary battery may be provided that comprises an electrode assembly, an electrolyte and a battery case. The electrode assembly may have a surface area of 0.01 to 0.2 m$^2$. The electrolyte may be provided with a weight of 440 g or less. The battery case may accommodate the electrode assembly and the electrolyte. The electrode assembly, the electrolyte and the battery case may be configured such that a frictional force between the electrode assembly and an inner surface of the battery case is 147 N (15 kgf) or more.

In particular, the surface area of the electrode assembly may be the product of the length and width of the same, provided that the electrode assembly has a rectangular shape as described above. The surface area of the electrode assembly may be 0.02 m$^2$ to 0.08 m$^2$, or 0.03 m$^2$ to 0.07 m$^2$, or 0.04 m$^2$ to 0.06 m$^2$.

As mentioned above, the weight of the electrolyte indicates a weight of the electrolyte that is present in the secondary battery. For the sake of simplicity, the weight of the electrolyte may be used herein interchangeably with a (total) amount of the electrolyte.

In addition, the secondary battery of this aspect may implement any, some or all of the features of the secondary battery and its components as disclosed herein. A repetition of all the features is omitted for the sake of conciseness and readability. Also, the secondary battery as described above may implement any, some or all of the features described with respect to the secondary battery of the latter aspect.

BRIEF DESCRIPTION OF THE DRAWINGS

The above and other aspects, features and other advantages will be more clearly understood from the following detailed description taken in conjunction with the accompanying drawings, in which:

FIG. 1 is an exploded perspective view of a secondary battery according to an example.
FIG. 2 is a view for explaining a configuration of a pouch.

DETAILED DESCRIPTION OF THE PREFERRED EMBODIMENT

Terms or words used in the specification and claims should not be construed as limited to a lexical meaning, and should be understood as appropriate notions by the inventor based on that he/she is able to define terms to describe his/her invention in the best way to be seen by others.

As the demand for high-capacity batteries, particularly for electric vehicles, has been increasing, the rated capacity of a cell of each secondary battery has been increasing as well. Thus, there is a development to increase the size and the weight of the electrode assembly of a secondary battery. However, as the size and weight of the electrode assembly increase, the battery case became more susceptible for damages in response to receiving an external impact, and the electrode assembly became more likely move inside the battery case and even eject therefrom. Such undesirable situations are more critical for a pouch-type battery, which battery case has a relatively low rigidity. If the battery case is damaged, an electrolyte may leak, or the electrode assembly may be deformed to seriously impair the battery performance and safety.

As a result of repeated research to solve the problems known from the prior art, when the dimensions of the electrode assembly and the content of the electrolyte satisfy specific conditions in view of the capacity, it was found that a frictional force between the electrode assembly and the battery case may increase. Thus, a displacement of the electrode assembly and/or a leakage of the electrolyte from the battery case may be suppressed even if receiving an external impact, thereby increasing an impact resistance.

A secondary battery may include: a battery case including an electrode assembly and an accommodation part for accommodating an electrolyte; and the electrode assembly and the electrolyte, which are accommodated in the accommodation part, and satisfying the following Equation 1.

$$[\text{Equation 1}] \quad W\,/\,S \le 42$$

Wherein the quotient W/S in Equation 1 has a dimension of (g/Ah)·m$^{-2}$.

The parameter W is a weight of electrolyte per unit capacity (i.e., per 1 Ah) of the secondary battery and may be measured by dividing an amount of electrolyte (unit: g) in the secondary battery by a rated capacity (unit: Ah) of the secondary battery. The weight of the electrolyte may be given in the unit of gram (g). The capacity may be defined as the rated capacity of the secondary battery, and may be given in the unit of Ah (ampere hour). The weight (amount) of electrolyte in the secondary battery may refer to a weight (amount) of electrolyte remaining in the secondary battery after an activation process.

The quotient W/S may be preferably about 30(g/Ah)·m$^{-2}$ to about 42(g/Ah)·m$^{-2}$, more preferably about

$35(g/Ah) \cdot m^{-2}$ to about $42(g/Ah) \cdot m^{-2}$. When W/S is about $42(g/Ah) \cdot m^{-2}$ or less, a frictional force between the electrode assembly and an inner surface of the battery case (e.g., a bottom surface of a cup part) that is in contact with the electrode assembly may greatly increase, and as a result, when an external impact is applied, a displacement of the electrode assembly may be suppressed, thereby preventing a leakage of the electrolyte from the battery case.

The parameter W may vary depending on the size of the electrode assembly, but is about 1.5 g/Ah to about 2.2 g/Ah. If W is too large, an effect of increasing in frictional force between the electrode assembly and the inner surface of the battery case may be insignificant. If W is too small, a battery performance may be deteriorated due to the insufficient electrolyte for the operation of the battery.

The parameter S indicates an area of the electrode assembly in the plan view as described above. S is a value obtained by multiplying a length and a width of the electrode assembly. The length and the width may be given in meters (m).

S is about $0.02$ $m^2$ to about $0.09$ $m^2$.. If S is too small, the battery capacity may decrease, and the effect of increasing the frictional force between the electrode assembly and the battery case may become insignificant. If S is too large, a risk of damage and even ignition related to instability issues may increase.

The secondary battery may have a rated capacity of about 50 Ah to about 200 Ah, preferably about 50 Ah to about 150 Ah, and more preferably about 60 Ah to about 140 Ah. When the rated capacity of the secondary battery satisfies the above range, a high-capacity secondary battery may be implemented.

The secondary battery may be a pouch-type secondary battery. In this case, the battery case may be a pouch including, for example, a barrier layer, a base material layer disposed on one surface of the barrier layer, and a sealant layer disposed on the other surface of the barrier layer and also include at least one or more cup parts recessed in one direction, and the electrode assembly and the electrolyte may be accommodated in the cup part of the pouch.

When the conditions of Equation (1) are satisfied, the frictional force between the electrode assembly and the bottom surface of the pouch cup may be greater than about 147 N (15 kgf), preferably about 147 N (15 kgf) to about 392 N (40 kgf), more preferably about 167 N (17 kgf) to about 343 N (35 kgf) to minimize the separation of the electrode assembly due to the external impact, thereby minimizing the damage of the pouch, and thus, the impact resistance may be very excellent.

Here, the frictional force between the electrode assembly and the bottom surface of the pouch cup may be measured by the following method.

First, a portion of the pouch of the secondary battery may be open by cutting, a positive electrode tab may be held with a zig connected to a wire, the wire may be connected to a universal testing machine (UTM), and then, force applied while pulling the wire at a speed of about 100 mm/min may be measured to evaluate frictional force between the electrode assembly and the bottom surface of the cup part.

The secondary battery according to the present invention may have high frictional force between the electrode assembly and the battery case to minimize the separation of the electrode assembly when the external impact is applied, thereby having excellent impact resistance. In the secondary battery according to the present invention, when a crash shock test is performed under a crash condition of about 133.7 G x 15.8 ms, leakage of the electrolyte does not occur.

The crash shock test may be performed by mounting a battery to be measured on a jig of a drop impact device, and then, the battery may freely drop at a specific height to determine whether the battery is damaged. Here, the free drop height is set in consideration of a crash condition (acceleration × duration time) to be measured. Specifically, the free drop height may be set by converting impact energy under the crash condition to be measured into potential energy, and then calculating a height at which the converted potential energy is obtained in consideration of the weight of the battery to be measured. Whether the battery is damaged may be evaluated by a presence or absence of leakage of the electrolyte.

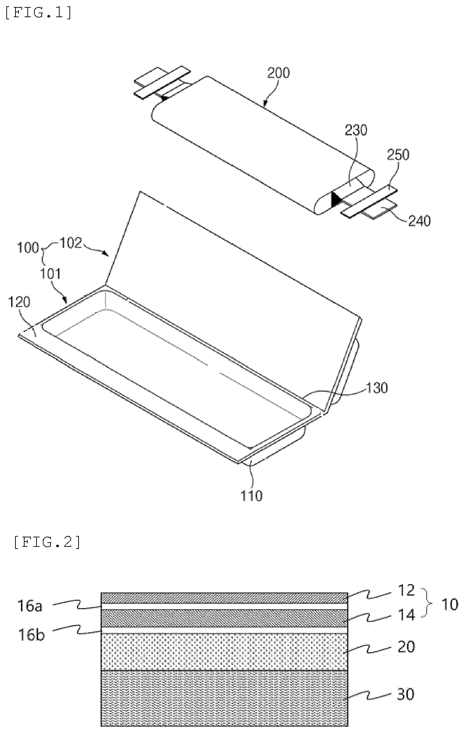

FIG. 1 is an exploded perspective view of a secondary battery. FIG. 2 is a cross-sectional view of a pouch film stack. Hereinafter, the secondary battery will be described in more detail.

### Pouch

The pouch 100 may be a battery case for accommodating an electrode assembly and an electrolyte and may include a barrier layer 20, a base material layer 10 disposed on one surface of the barrier layer, and a sealant layer 30 disposed on the other surface of the barrier layer and also include at least one or more cup parts (accommodation part) recessed in one direction.

Specifically, the pouch 100 may have flexibility and may be manufactured through a method, in which a pouch film stack in which the base material layer 10, the barrier layer 20, and the sealant layer 30 are sequentially stacked is inserted into a press molding device, and a pressure is applied to a partial area of the pouch film stack by using a punch so that the pouch film stack is stretched to form a cup part that is recessed in one direction.

**Base material layer**

The base material layer 10 may be disposed on the outermost layer of the pouch and be configured to protect the electrode assembly from an external impact and electrically insulate the electrode assembly.

The base material layer 10 may be made of a polymer material, for example, made of at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazoles, polyarylates, and Teflon.

The base material layer 10 may have a single-layer structure. Alternatively, the base material layer 10 may have a multi-layer structure in which different polymer films 12 and 14 are stacked as illustrated in FIG. 2. When the base material layer 10 may have a multi-layer structure, an adhesive layer 16a may be disposed between the polymer films.

The base material layer 10 may have a total thickness of about 10 $\mu$m to about 60 $\mu$m, preferably about 20 $\mu$m to about 50 $\mu$m, and more preferably about 30 $\mu$m to about 50 $\mu$m. When the base material layer has the multi-layer structure, the thickness may be a thickness including the adhesive layer. When the base material layer 10 satisfies the above range, durability, insulation, and moldability may be excellent. When the thickness of the base material layer is too thin, the durability may be reduced, and the base material layer may be damaged during the molding process. When the thickness is too thick, the moldability may be deteriorated, the overall thickness of the pouch may increase, and a battery accommodation space may be reduced, resulting in reducing energy density.

According to one embodiment, the base material layer 10 may have a stacked structure of a polyethylene terephthalate (PET) film and a nylon film. Here, the nylon film may be disposed on a side of the barrier layer 20, that is, inside the barrier layer 20, and the polyethylene terephthalate film may be disposed on a surface side of the pouch.

Polyethylene terephthalate (PET) may have excellent durability and electrical insulation properties, and thus, when the PET film is placed on the surface side, the durability and insulation properties may be excellent. However, in the case of the PET film, since the adhesiveness with an aluminum alloy thin film constituting the barrier layer 20 is weak, and a stretching behavior is different, when the PET film is placed on the side of the barrier layer, the base material layer and the barrier layer may be peeled during the molding process, and the barrier layer may not be uniformly stretched to cause deterioration of the moldability. In comparison, since the nylon film has a stretching behavior similar to that of the aluminum alloy thin film constituting the barrier layer 20, an effect of improving the moldability may be obtained when the nylon film is disposed between the polyethylene terephthalate and the barrier layer.

The polyethylene terephthalate film may have a thickness of about 5 $\mu$m to about 20 $\mu$m, preferably about 5 $\mu$m to about 15 $\mu$m, more preferably about 7 $\mu$m to about 15 $\mu$m, and the nylon film may have a thickness of about 10 $\mu$m to about 40 $\mu$m, preferably about 10 $\mu$m to about 35 $\mu$m, more preferably about 15 $\mu$m to about 25 $\mu$m. When the thicknesses of the polyethylene terephthalate film and the nylon film satisfy the above ranges, the moldability and rigidity after the molding may be excellent.

**Barrier layer**

The barrier layer 20 may be configured to secure mechanical strength of the pouch 100, block introduction and discharge of a gas or moisture outside the secondary battery, and prevent the electrolyte from leaking.

The barrier layer 20 may have a thickness of about 40 $\mu$m to about 100 $\mu$m, more preferably about 50 $\mu$m to about 80 $\mu$m, and more preferably about 60 $\mu$m to about 80 $\mu$m. When the thickness of the barrier layer satisfies the above range, the moldability may be improved to increase in cup molding depth, or improve resistance to external stress after the molding because cracks and/or pinholes are less generated even when two cups are molded.

The barrier layer 20 may be made of a metal material, and specifically, may be made of an aluminum alloy thin film.

The aluminum alloy thin film may include aluminum and a metal element in addition to the aluminum, for example, at least one or two or more metal elements selected from the group consisting of iron (Fe), copper (Cu), chromium (Cr), manganese (Mn), nickel (Ni), magnesium (Mg), and zinc (Zn).

Preferably, the aluminum alloy thin film may have an iron (Fe) content of about 1.2 wt% to about 1.7 wt%, preferably about 1.3 wt% to about 1.7 wt%, more preferably about 1.3 wt% to about 1.45 wt%. When the iron (F2) content in the aluminum alloy thin film satisfies the above range, an occurrence of the cracks or pinholes may be minimized even when the cup part is formed deeply.

**Sealant layer**

The sealant layer 30 may be configured to seal the pouch by being bonded through thermal compression and be disposed at the innermost layer of the pouch film stack 1.

Since the sealant layer 30 is a surface that is in contact with the electrolyte and electrode assembly after the pouch is molded, the sealant layer 30 may have to have insulation and corrosion resistance, and also, since the inside of the sealant layer 30 has to be completely sealed to block movement of the material between the inside and the outside, the sealant layer 30 may have to have height sealability.

The sealant layer 30 may be made of a polymer material, for example, made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazoles, polyarylates, and Teflon and particularly preferable to include polypropylene (PP) having excellent mechanical properties such as tensile strength, rigidity, surface hardness, abrasion resistance, and heat resistance, and chemical properties such as corrosion resistance.

More specifically, the sealant layer 30 may include polypropylene, cast polypropylene (CPP), acid modified polypropylene, a polypropylene-butylene-ethylene copolymer, or a combination thereof.

The sealant layer 30 may have a single-layer structure or a multi-layer structure including two or more layers made of different polymer materials.

The sealant layer may have a total thickness of about 60 $\mu$m to about 100 $\mu$m, preferably about 60 $\mu$m to about 90 $\mu$m, and more preferably about 70 $\mu$m to about 90 $\mu$m. If the thickness of the sealant layer is too thin, the sealing durability and insulating properties may be deteriorated, and if the sealant layer is too thick, the flexibility may be deteriorated, and the total thickness of the pouch film stack may increase, resulting in a decrease in energy density versus volume.

The pouch film stack 1 may be manufactured through the method for manufacturing the pouch film stack known in the art. For example, the pouch film stack may be manufactured through a method, in which the base material layer 10 is attached to a top surface of the barrier layer 20 through an adhesive, and the sealant layer 30 is formed on a bottom surface of the barrier layer 20 through co-extrusion or an adhesive, but is not limited thereto.

The pouch 100 may be manufactured by inserting the pouch film stack as described above into a molding device and applying a pressure to a partial area of the pouch film stack using a punch to mold the cup part. Here, the pressure may be about 0.3 MPa to about 1 Mpa, preferably about 0.3 Mpa to about 0.8 Mpa, more preferably about 0.4 Mpa to about 0.6 Mpa. If the pressure is too low during the molding of the cup part, excessive drawing may occur, and wrinkles may occur, and if the pressure is too high, drawing may not be performed well, and thus, a molding depth may be reduced.

A moving speed of the punch may be about 20 mm/min to about 80 mm/min, preferably about 30 mm/min to about 70 mm/min, and more preferably about 40 mm/min to about 60 mm/min. If the pressure is too small, or the moving speed of the punch is too fast during the molding, the wrinkles may occur due to buckling, and if the pressure is too large, or the moving speed of the punch is too slow during the molding, stress concentrated into the cup part during the molding may increase, resulting in increases of occurrence of the pinholes or cracks.

The pouch 100, which is manufactured through the above method, may include a lower case 101, an upper case 102, and a folding part 130 connecting the lower case to the lower case, and the upper case and/or the lower case may include a cup part 110 recessed in one direction.

Specifically, as illustrated in FIG. 1, the pouch 100 may have a cup shape in which the cup part 110 is formed in only the lower case 101, but is not limited thereto. For example, the pouch 100 may have a 2-cup shape in which cup parts are formed on all of the upper case and the lower cases. In the case of the 2-cup pouch, after accommodating the electrode assembly and the electrolyte, the upper case may be folded so that the cup part of the upper case and the cup part of the lower case face each other, and thus, the electrode assembly that is thicker than that of the pouch having the 1-cup shape may be accommodated to implement a high energy density.

The cup part 110 may have an accommodation space for accommodating the electrode assembly 200. The pouch 100 may include a terrace 120 around the cup part 110. The terrace 120 may refer to a non-molded portion of the pouch film stack, that is, a remaining area except for the cup part 110. The terrace 129 may be a portion that is sealed through thermal bonding in a process of accommodating the electrode assembly 200 in the cup part 110 and injecting the electrolyte so as to be sealed.

The cup part 110 may include a bottom surface and a circumferential surface. The circumferential surface may connect a bottom surface to the terrace 120. The circumferential surface may be provided in plurality, in more detail, in four. The bottom surface may cover one surface of the electrode assembly 200, and the circumferential surface may surround the electrode assembly 200.

The folding part 130 may connect the lower case 101 to the upper case 102, accommodate the electrode assembly 200 in the cup part 110, and inject the electrolyte and then may be folded to allow the upper case 102 to seal the cup part 110 of the lower case 101. When the folding part 130 is provided, since the lower case 101 and the upper case 102 are integrally connected to each other, when the sealing process is performed later, the number of sides to be sealed may be reduced to improve processability.

The folding part 130 is provided to be spaced apart from the cup part 110, and a spaced distance between the folding part 130 and the cup part 110 may be about 0.5 mm to about 3 mm, preferably about 0.5 mm to about 2 mm. If the folding part 130 is provided too close to the cup part 110, the folding may not be smoothly performed, and if the folding part 130 is provided too far from the cup part 110, a total volume of the secondary battery may increase, and the energy density versus volume may decrease. In the case of the 2-cup case, the folding part may be provided to satisfy the spaced distance for each cup part.

**Electrode assembly**

The electrode assembly 200 may include a plurality of electrodes and a plurality of separators, which are alternately stacked. The plurality of electrodes include a positive electrode and a negative electrode, which are alternately stacked with the separator therebetween and have opposite polarities.

In addition, the electrode assembly 200 may include a plurality of electrode tabs 230 welded to each other. The plurality of electrode tabs 230 may be connected to the plurality of electrodes 210 and protrude from the electrode assembly 200 to the outside to serve as a passage through which electrons move between the inside and the outside of the electrode assembly 200. The plurality of electrode tabs 230 may be disposed inside the pouch 100.

The electrode tab 230 connected to the positive electrode and the electrode tab 230 connected to the negative electrode may protrude in different directions with respect to the electrode assembly 200. However, the present invention is not limited thereto, and the electrode tab 230 connected to the positive electrode and the electrode tab 230 connected to the negative electrode may protrude in the same direction in parallel with each other.

A lead 240 supplying electricity to the outside of the secondary battery may be connected to the plurality of electrode tabs 230 by spot welding or the like. The lead 240 may have one end connected to the plurality of electrode tabs 230 and the other end protruding to the outside of the pouch 100.

A portion of the lead 240 may be surrounded by an insulating part 250. For example, the insulating part 250 may include an insulating tape. The insulating part 250 may be disposed between the terrace 120 and the second case 102 of the first case 101, and in this state, the terrace 120 and the second case 102 may be thermally fused to each other. In this case, a portion of each of the terrace 120 and the second case 102 may be thermally fused to the insulating part 250. Thus, the insulating part 250 may prevent the generated from the electrode assembly 200 from flowing to the pouch 100 through the lead 240 and may maintain sealing of the pouch 100.

A ratio of the full length to the full width of the electrode assembly 200 may be about 5 to about 10, preferably about 5 to about 8. When the ratio of the full length to the full width satisfies the above range, high energy density may be implemented in a limited space.

For example, the electrode assembly may have a full length of about 400 mm to about 600 mm, a full width of about 50 mm to about 150 mm, preferably a full length of about 500 mm to about 600 mm, and a full width of about 50 mm to about 100 mm.

The weight of the electrode assembly may be 500 g to 1500 g, preferably 550 g to 1450 g, and more preferably 600 g to 1400 g, without being limited thereto. When the weight of the electrode assembly satisfies the above range, high capacity can be realized, and friction between the electrode assembly and the inner surface of the battery case increases, resulting in excellent impact resistance.

The secondary battery may further include at least one fixing member on the outer surface of the electrode assembly, if necessary. In the case of a rectangular electrode assembly (referred to as a 'long-cell' for convenience) whose length is longer than the width, fixing members are used to prevent the misalignment of the components of the electrode assembly such as the anode, cathode, and separator. The fixing member fix the electrode assembly by wrapping it in width direction.

The fixing member may include a porous structure. When the fixing member includes a porous structure, the electrolyte can pass through the fixing member and be impregnated into the electrode assembly, thereby preventing the electrolyte wetting property of the electrode assembly from being reduced due to the fixing member. Specifically, the fixing member may be a finishing tape with an adhesive layer formed on one side of a polymer base layer having a porous structure, but is not limited thereto. The polymer material may be, for example, polyethylene terephthalate (PET), polyvinyl chloride (PVC), polyethylene (PE), etc., but is not limited thereto.

The fixing member preferably has a width of approximately 10 to 50 mm or 20 to 40 mm along the full width direction of the electrode assembly. If the width of the fixing member is too wide, the outer surface area of the electrode assembly covered by the fixing member increases and thereby an electrolyte wetting property may reduce due to decreases of the contact area with the electrolyte and may decrease impact resistance due to decreases of the friction between the electrode assembly and the battery case. On the other hand, if the width of the fixing member is too thin, the effect of fixing the electrode assembly may be reduced.

The secondary battery may include 2 to 10 fixing members, preferably 2 to 8 fixing members, and more preferably 3 to 7 fixing members. At this time, the fixing members may be disposed in left and right symmetrical positions along the length direction, and preferably, the fixing members may be spaced apart at equal intervals. When a plurality of fixing members are provided and arranged as above, an electrode assembly having a long-cell structure with a long length can be firmly fixed.

Meanwhile, the contact area between the fixing member and the electrode assembly may be 30% or less, 25% or less, or 20% or less of the total surface area of the electrode assembly. Specifically, the contact area between the fixing member and the electrode assembly may be 0 to 30%, 1 to 30%, 5 to 30%, 5 to 25%, or 5 to 20% of the total surface area of the electrode assembly.

The contact area between the fixing member and the electrode assembly can be adjusted by adjusting the width or number of the fixing member used. Since the commonly used fixing member is made of a material with a lower friction coefficient than the separator disposed on the outermost surface of the electrode assembly. Accordingly, as the area of the fixing member surrounding the electrode assembly increases, the friction between the electrode assembly and the inner surface of the battery case will decrease. Therefore, when using a fixing member, it is desirable to suppress a decrease in friction force by setting the contact area between electrode assemblies to 30% or less.

## Electrolyte

The electrolyte may be configured to move lithium ions generated by an electrochemical reaction of the electrode during charging and discharging of the secondary battery and may include an organic solvent and lithium salt.

The organic solvent may be used without particular limitation as long as it serves as a medium through which ions involved in the electrochemical reaction of the battery move. Specifically, examples of the organic solvent may include ester solvents such as methyl acetate, ethyl acetate, $\gamma$-butyrolactone, and $\varepsilon$-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC), and propylene carbonate (PC); alcohol solvents such as ethyl alcohol and isopropyl alcohol; nitriles such as R-CN (R is a C2 to C20 straight-chain, branched or cyclic hydrocarbon group, and may include a double-bonded aromatic ring or an ether bond); amides such as dimethylformamide; dioxolanes such as 1,3-dioxolane; or sulfolanes. Among them, carbonate-based solvents are preferable, and cyclic carbonates (e.g., ethylene carbonate or propylene carbonate, etc.) having high ionic conductivity and high permittivity that may increase in charging and discharging performance of the battery, and low-viscosity linear carbonate-based compounds (e.g., mixture of ethyl methyl carbonate, dimethyl carbonate, or diethyl carbonate) is more preferable.

The lithium salt may be used Absence particular limitation as long as it is a compound capable of providing lithium ions used in the lithium secondary battery. Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$, or the like. The concentration of the lithium salt may be preferably used within the range of about 0.1 M to about 5.0 M, preferably about 0.1 M to about 3,0 M. When the concentration of the lithium salt is within the above range, the electrolyte has appropriate conductivity and viscosity, and thus, excellent electrolyte performance may be exhibited, and the lithium ions may move effectively.

In addition to the components of the electrolyte, the electrolyte may further include an adhesive for the purpose of improving lifespan characteristics of the battery, suppressing a decrease in battery capacity, and improving a discharge capacity of the battery.

## Embodiment 1

A pouch in which nylon/polyethylene terephthalate/Al alloy thin film/polypropylene are sequentially stacked, and a cup part is molded was prepared. A stack-type electrode assembly having a full length of about 548 mm, a full width of about 99 mm and a weight of 1380g was accommodated in the cup part, and an electrolyte was injected so as to be sealed, and then, an activation process was performed to manufacture a pouch-type secondary battery. Here, the electrolyte was injected so that a remaining amount of electrolyte per unit capacity after the activation process is about 2.2 g/Ah.

## Embodiment 2

A pouch-type secondary battery was manufactured in the same manner as in Embodiment 1 except that the electrolyte is injected so that a remaining amount of electrolyte per unit capacity after the activation process is about 2.15 g/Ah.

## Embodiment 3

A pouch-type secondary battery was manufactured in the same manner as in Embodiment 1 except that a stack-type electrode assembly having a full length of about 548 mm, a full width of about 99 mm and a weight of 641g is used, and the electrolyte is injected so that a remaining amount of electrolyte per unit capacity after the activation process is about 1.7 g/Ah.

**Comparative Example 1**

A pouch-type secondary battery was manufactured in the same manner as in Embodiment 1 except that a stack-type electrode assembly having a full length of about 548 mm, a full width of about 99 mm and a weight of 641g is used, and the electrolyte is injected so that a remaining amount of electrolyte per unit capacity after the activation process is about 2.2 g/Ah.

**Comparative Example 2**

A pouch-type secondary battery was manufactured in the same manner as in Embodiment 1 except that the electrolyte is injected so that a remaining amount of electrolyte per unit capacity after the activation process is about 2.3 g/Ah.

**Experimental Example 1: Friction force evaluation**

In the pouch-type secondary batteries prepared in Embodiments 1 to 3 and Comparative Examples 1 to 2, the frictional force between the inner surface of the pouch cup and the electrode assembly was measured by the following method.
A portion of the pouch of the secondary battery was cut, a positive electrode tab was held with a zig connected to a wire, the wire was connected to a universal testing machine (UTM), and then, force applied while pulling the wire at a speed of about 100 mm/min was measured to evaluate frictional force between the electrode assembly and the bottom surface of the cup part.
Results of the measurement are shown in Table 1 below.

**Experimental Example 2: Crash shock test**

A crash shock test was performed on the pouch-type secondary batteries prepared in Embodiments 1 to 3 and Comparative Examples 1 to 2 under a 133.7 G X 15.8 ms crash condition. Results of the measurement are shown in Table 1 below. After the test, when leakage of the electrolyte and separation of the electrode assembly do not occur, it was expressed as Pass, and when leakage of the electrolyte and/or separation of the electrode assembly occur, it was expressed as Fail.

[Table 1]

| Classification | Full length [m] | Full width [m] | Remaining weight of the electrolyte per unit capacity [g/Ah] | W/S | Frictional force [N] and ([kgf]) | Crash shock test result |
|---|---|---|---|---|---|---|
| Embodiment 1 | 0.548 | 0.099 | 2.2 | 40.6 | 172 (17.5) | Pass |
| Embodiment 2 | 0.548 | 0.099 | 2.15 | 39.2 | 202 (20.6) | Pass |
| Embodiment 3 | 0.548 | 0.078 | 1.7 | 39.8 | 318 (32.4) | Pass |
| Comparative Example 1 | 0.548 | 0.078 | 2.2 | 51.5 | 114 (11.6) | Fail |
| Comparative Example 2 | 0.548 | 0.099 | 2.3 | 42.4 | 112 (11.4) | Fail |

As shown in [Table 1], in the case of the batteries according to Embodiments 1 to 3, which have a W/S of less than 42, the frictional force between the electrode assembly and the inner surface of the pouch was as high as about 147 N (15 kgf) or more, and thus, separation of the electrode assembly due to an external impact was suppressed to exhibit excellent impact resistance. On the other hand, in the case of Comparative Examples 1 and 2, which have a W/S exceeding about 42, the frictional force was significantly reduced, and as a result, the leakage of the electrolyte occurred during the impact test.
When the size of the electrode assembly and the amount of electrolyte per unit capacity satisfy the specific conditions like the secondary battery according to the present invention, the frictional force between the electrode assembly and the battery case may increase compared to the related art, and thus, when the external impact is applied, the separation of the electrode assembly and/or the leakage of the electrolyte may be suppressed to implement the excellent impact resistance.

**Claims**

1. A secondary battery comprising:

   an electrode assembly;
   an electrolyte;
   a battery case accommodating the electrode assembly and the electrolyte,
   wherein the secondary battery is configured such to satisfy the following Equation 1:

$$[\text{Equation 1}]$$

$$W / S \le 42 \ (g/Ah) \cdot m^{-2}$$

   where, in Equation 1, W is a weight of the electrolyte in g per unit capacity of the secondary battery in Ah, and S is a product of a length in m and a width in m of the electrode assembly,
   wherein W in Equation 1 ranges between 1.5 g/Ah and 2.2 g/Ah,
   wherein S in Equation 1 ranges between 0.02 m$^2$ and 0.09 m$^2$, and
   wherein, when a crash shock test is performed on the secondary battery under a 133.7 G $\times$ 15.8 m·s crash condition, a weight loss of the electrolyte through leakage from the secondary battery is 0, wherein the crash shock test is performed as in the description.

2. The secondary battery of claim 1, wherein the battery case is a pouch.

3. The secondary battery of claim 2, wherein the pouch is made of a pouch film tack, wherein the pouch film stack comprises:

   a barrier layer;
   a base material layer disposed on one surface of the barrier layer; and
   a sealant layer disposed on the other surface of the barrier layer,
   wherein the pouch film stack is press-formed, particularly stretch-formed and/or drawn, such as to have one or more cup parts protruding outwardly, and
   wherein the electrode assembly is accommodated in the one or more cup parts.

4. The secondary battery of any of the preceding claims, wherein the W/S ranges between 30 (g/Ah)·m$^{-2}$ and 42 (g/Ah)·m$^{-2}$.

5. The secondary battery of any of the preceding claims, wherein W in Equation 1 is 2.2 g/Ah or less.

6. The secondary battery of any of the preceding claims,
   wherein the electrode assembly has a substantially rectangular shape in a plan view such that a ratio of a length to a width of the electrode assembly ranges between 5 and 10.

7. The secondary battery of any of the preceding claims,
   wherein the electrode assembly has a substantially rectangular shape in a plan view such to have a length of 400 mm to 600 mm and a width of 50 mm to 150 mm.

8. The secondary battery of any of the preceding claims,
   wherein the secondary battery is configured such that a frictional force between the electrode assembly and an inner surface of the battery case is 147 N (15 kgf) or more, wherein the frictional force is determined as in the description.

9. The secondary battery of any of the preceding claims, wherein a rated capacity of the secondary battery ranges between 50 Ah and 200 Ah, wherein the rated capacity is determined as in the description.

10. The secondary battery of any of the preceding claims,
    wherein the electrolyte is located at least partly between the electrode assembly and an inner surface of the battery case facing the electrode assembly.

11. A secondary battery comprising:

an electrode assembly having a surface area of 0.01 to 0.2 m$^2$;

an electrolyte with a weight of 440 g or less;

a battery case accommodating the electrode assembly and the electrolyte,

wherein the electrode assembly, the electrolyte and the battery case are configured such that a frictional force between the electrode assembly and an inner surface of the battery case is 147 N (15 kgf) or more, wherein the frictional force is determined as in the description.

12. The secondary battery of claim 11,
wherein the electrolyte is located at least partly between the electrode assembly and an inner surface of the battery case facing the electrode assembly.


**Patentansprüche**

1. Sekundärbatterie aufweisend:

eine Elektrodenanordnung;

einen Elektrolyten;

ein Batteriegehäuse, das die Elektrodenanordnung und den Elektrolyten aufnimmt,

wobei die Sekundärbatterie so konfiguriert ist, dass sie die folgende Gleichung 1 erfüllt:

$$[\text{Gleichung 1}]$$

$$W/S \leq 42\ (g/Ah)\cdot m^{-2}$$

wobei in Gleichung 1 W ein Gewicht des Elektrolyten in g pro Einheitskapazität der Sekundärbatterie in Ah ist und S ein Produkt einer Länge in m und einer Breite in m der Elektrodenanordnung ist,

wobei W in Gleichung 1 zwischen 1,5 g/Ah und 2,2 g/Ah liegt,

wobei S in Gleichung 1 zwischen 0,02 m$^2$ und 0,09 m$^2$ liegt, und

wobei, wenn ein Crashschocktest an der Sekundärbatterie unter einer 133,7 G $\times$ 15,8 m·s-Crashbedingung durchgeführt wird, ein Gewichtsverlust des Elektrolyten durch Leckage aus der Sekundärbatterie 0 ist, wobei der Crashschocktest wie in der Beschreibung durchgeführt wird.

2. Sekundärbatterie nach Anspruch 1, wobei das Batteriegehäuse ein Pouch ist.

3. Sekundärbatterie nach Anspruch 2, wobei der Pouch aus einem Pouchfolienstapel hergestellt ist, wobei der Pouchfolienstapel aufweist:

eine Barriereschicht;

eine Basismaterialschicht, die auf einer Oberfläche der Barriereschicht angeordnet ist; und

eine Dichtungsschicht, die auf der anderen Oberfläche der Barriereschicht angeordnet ist,

wobei der Pouchfolienstapel pressgeformt, insbesondere streckgeformt und/oder gezogen ist, so dass er ein oder mehrere Schalenteile aufweist, die nach außen vorstehen, und

wobei die Elektrodenanordnung in dem einen Schalenteil oder den mehreren Schalenteilen aufgenommen ist.

4. Sekundärbatterie nach einem der vorhergehenden Ansprüche, wobei das W/S zwischen 30 (g/Ah)·m$^{-2}$ und 42 (g/Ah)·m$^{-2}$ liegt.

5. Sekundärbatterie nach einem der vorhergehenden Ansprüche, wobei W in Gleichung 1 2,2 g/Ah oder weniger beträgt.

6. Sekundärbatterie nach einem der vorhergehenden Ansprüche,
wobei die Elektrodenanordnung eine im Wesentlichen rechteckige Form in einer Draufsicht derart aufweist, dass ein Verhältnis einer Länge zu einer Breite der Elektrodenanordnung zwischen 5 und 10 liegt.

7. Sekundärbatterie nach einem der vorhergehenden Ansprüche,
wobei die Elektrodenanordnung eine im Wesentlichen rechteckige Form in einer Draufsicht derart aufweist, dass sie eine Länge von 400 mm bis 600 mm und eine Breite von 50 mm bis 150 mm aufweist.

**8.** Sekundärbatterie nach einem der vorhergehenden Ansprüche,
wobei die Sekundärbatterie so konfiguriert ist, dass eine Reibungskraft zwischen der Elektrodenanordnung und einer Innenfläche des Batteriegehäuses 147 N (15 kgf) oder mehr beträgt, wobei die Reibungskraft wie in der Beschreibung bestimmt wird.

**9.** Sekundärbatterie nach einem der vorhergehenden Ansprüche, wobei eine Nennkapazität der Sekundärbatterie zwischen 50 Ah und 200 Ah liegt, wobei die Nennkapazität wie in der Beschreibung bestimmt wird.

**10.** Sekundärbatterie nach einem der vorhergehenden Ansprüche,
wobei sich der Elektrolyt zumindest teilweise zwischen der Elektrodenanordnung und einer Innenfläche des Batteriegehäuses befindet, die der Elektrodenanordnung zugewandt ist.

**11.** Sekundärbatterie aufweisend:

eine Elektrodenanordnung mit einer Oberfläche von 0,01 bis 0,2 m$^2$ ;
einen Elektrolyten mit einem Gewicht von 440 g oder weniger;
ein Batteriegehäuse, das die Elektrodenanordnung und den Elektrolyten aufnimmt,
wobei die Elektrodenanordnung, der Elektrolyt und das Batteriegehäuse so konfiguriert sind, dass eine Reibungskraft zwischen der Elektrodenanordnung und einer Innenfläche des Batteriegehäuses 147 N (15 kgf) oder mehr beträgt, wobei die Reibungskraft wie in der Beschreibung bestimmt wird.

**12.** Sekundärbatterie nach Anspruch 11,
wobei sich der Elektrolyt zumindest teilweise zwischen der Elektrodenanordnung und einer Innenfläche des Batteriegehäuses befindet, die der Elektrodenanordnung zugewandt ist.

**Revendications**

**1.** Batterie secondaire comprenant :

un ensemble d'électrodes ;
un électrolyte ;
un boîtier de batterie contenant l'ensemble d'électrodes et l'électrolyte,
la batterie secondaire étant configurée de manière à satisfaire l'équation 1 suivante :

$$[\text{Équation } 1]$$

$$W / S \leq 42 \ (\text{g/ah})\cdot\text{m}^{-2}$$

dans l'équation 1, W étant un poids de l'électrolyte en g par capacité unitaire de la batterie secondaire en Ah, et S étant un produit d'une longueur en m et d'une largeur en m de l'ensemble d'électrodes,
dans l'équation 1 W variant entre 1,5 g/Ah et 2,2 g/Ah,
dans l'équation 1, S variant entre 0,02 m$^2$ et 0,09 m$^2$, et
lors de l'exécution d'un test de choc de collision sur la batterie secondaire avec une condition de collision de 133,7 G $\times$ 15,8 m·s, une perte de poids de l'électrolyte par une fuite de la batterie secondaire étant nulle, le test de choc étant effectué conformément à la description.

**2.** Batterie secondaire de la revendication 1, l'étui de batterie étant une poche.

**3.** Batterie secondaire selon la revendication 2, la poche étant composée d'un empilement de pellicules de poche, l'empilement de pellicules de poche comprenant :

une couche barrière ;
une couche de matière de base disposée sur une surface de la couche barrière ; et
une couche d'agent de scellement disposée sur l'autre surface de la couche barrière,
l'empilement de film de poche étant moulé par pression, en particulier par étirage et/ou emboutissage, de façon à obtenir un ou plusieurs parties cupuliformes saillantes vers l'extérieur, et
l'ensemble d'électrode étant contenu dans l'une ou plusieurs parties cupuliformes.

**4.** Batterie secondaire selon une quelconque des revendications précédentes, W/S variant entre 30 (g/Ah)·m$^{-2}$ et 42 (g/Ah)·m$^{-2}$.

**5.** Batterie secondaire selon une quelconque des revendications précédentes, à l'équation 1 W étant 2,2 g/Ah ou moins.

**6.** Batterie secondaire selon une quelconque des revendications précédentes,
l'ensemble d'électrodes présentant une forme substantiellement rectangulaire en vue en plan, de sorte qu'un rapport d'une longueur sur une largeur de l'ensemble d'électrodes varie entre 5 et 10.

**7.** Batterie secondaire selon une quelconque des revendications précédentes,
l'ensemble d'électrodes présentant une forme substantiellement rectangulaire en vue en plan, en présentant ainsi une longueur allant de 400 mm à 600 mm et une largeur allant de 50 à 150 mm.

**8.** Batterie secondaire selon une quelconque des revendications précédentes,
la batterie secondaire étant configurée de sorte qu'une force de friction entre l'ensemble d'électrodes et une surface intérieure du boîtier de la batterie soit égale à 147 N (15 kgf) ou supérieure, la force de friction étant déterminée conformément à la description.

**9.** Batterie secondaire de l'une des revendications précédentes, une capacité nominale de la batterie secondaire variant entre 50 Ah et 200 Ah, la capacité nominale étant déterminée conformément à la description.

**10.** Batterie secondaire selon une quelconque des revendications précédentes,
l'électrolyte étant situé au moins partiellement entre l'ensemble d'électrodes et une surface intérieure du boîtier de la batterie située face à l'ensemble d'électrodes.

**11.** Batterie secondaire comprenant :

un ensemble d'électrodes dont la superficie est comprise entre 0,01 et 0,2 m$^2$ ;
un electrolyte d'un poids de 440 g ou moins ;
un boîtier de batterie contenant l'ensemble d'électrodes et l'électrolyte,
l'ensemble d'électrodes, l'électrolyte, et le boîtier de la batterie étant configurés de sorte qu'une force de friction entre l'ensemble d'électrodes et une surface intérieure du boîtier de la batterie soit égale à 147 N (15 kgf) ou supérieure, la force de friction étant déterminée conformément à la description.

**12.** Batterie secondaire selon la revendication 11,
l'électrolyte étant situé au moins partiellement entre l'ensemble d'électrodes et une surface intérieure du boîtier de la batterie située face à l'ensemble d'électrodes.

[FIG.1]

[FIG.2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220132745
- US 2020251786 A1